# EUROPÄISCHE PATENTANMELDUNG

(11) **EP 2 878 958 A2**
(43) Veröffentlichungstag der Anmeldung: **03.06.2015**
(21) Anmeldenummer: 14194444.7
(22) Anmeldetag: 24.11.2014
(51) Int. Cl.: G01P 3/66

(54) **Vorrichtung und Verfahren zur Geschwindigkeitsmessung**

(30) Priorität: 29.11.2013 DE 102013018003
(71) Anmelder: Eser, Hermann, 85716 München (DE)
(72) Erfinder: Eser, Hermann, 85716 München (DE)
(74) Vertreter: Dosterschill, Peter

(57) **Zusammenfassung**

Die Erfindung betrifft eine Vorrichtung (1) zur Geschwindigkeitsmessung von Fahrzeugen, mindestens mit einem ersten Magnetfeldsensor (31), einem zweiten Magnetfeldsensor (32), mit einer Kamera (2) und mit einem Prozessor (Pr), der mit dem ersten Magnetfeldsensor (31), dem zweiten Magnetfeldsensor (32) und der Kamera (2) verbunden ist, wobei der erste Magnetfeldsensor (31) bei Erfassung eines Fahrzeugs ein zeitlich erstes Signal (S1) und der zweite Magnetfeldsensor (32) ein zeitlich zweites Signal (S2) erzeugt. Die Geschwindigkeit wird aus dem gemessenen zeitlichen Abstand und dem bekannten räumlichen Abstand ermittelt.

Der erste oder zweite Magnetfeldsensor oder die Kamera werden an einem ausklappbaren oder ausfahrbaren Träger befestigt, sodass das Gerät leichter transportiert werden kann. Die Abstände der Sensoren (31, 32) lassen sich verändern, so dass die Vorrichtung kompakt ausgestaltet werden kann und eine hinreichend hohe Meßgenauigkeit erzielt wird.

Beim Erfassen eines Fahrzeugs durch den ersten Sensor wird ein Frontfoto des Fahrzeugs erstellt, welches im Fall einer Geschwindigkeitsüberschreitung gespeichert werden kann und ansonsten wieder gelöscht wird.

## Beschreibung

Die Erfindung betrifft eine Vorrichtung zur Geschwindigkeitsmessung nach dem Oberbegriff des Patentanspruchs 1 sowie ein Verfahren zur Geschwindigkeitsmessung nach dem Oberbegriff des Patentanspruchs 9.

Überhöhte Geschwindigkeit von Kraftfahrzeugen führt oft zu Unfällen, die durch Einhalten der vorgeschriebenen Geschwindigkeit vermieden werden könnten.

Vorrichtungen zur Geschwindigkeitsmessung sind unter anderem aus der DE 43 20 167 A1, der DE 697 11 234 T2 und US 2013 /0 057 264 A1 bekannt.

Aus der DE 20 2008 000 437 U1 ist bereits ein System zur Geschwindigkeitsmessung von Fahrzeugen bekannt. Das System weist einen ersten und einen zweiten Erdmagnetfeldsensor auf, die in einem festen Abstand voneinander angeordnet sind, wobei jeder Sensor bei Erfassung der Geschwindigkeit eines Fahrzeugs je ein Signal erzeugt. Die beiden Signale werden innerhalb einer Zeitdifferenz erzeugt, die eine Funktion der Geschwindigkeit ist, die das Fahrzeug zwischen dem ersten und dem zweiten Erdmagnetfeldsensor hat. Eine Auswerteschaltung des Systems berechnet aus dem festen Abstand und der Zeitdifferenz die Geschwindigkeit des Fahrzeugs.

Der Erfindung liegt die Aufgabe zugrunde, eine Vorrichtung der eingangs genannten Art zu schaffen, die in einfacher Weise ausgestaltet ist und an unterschiedlichen Orten einsetzbar ist, sowie ein Verfahren der eingangs genannten Art.

Die Lösung dieser Aufgabe erfolgt durch eine Vorrichtung und ein Verfahren, die in den Patentansprüchen definiert sind.

Eine vorteilhafte Ausführungsform der erfindungsgemäßen Vorrichtung mit einem ersten Magnetfeldsensor, einem zweiten Magnetfeldsensor und mit einer Kamera ist dadurch gekennzeichnet, dass die Vorrichtung in der Weise ausgestaltet ist, dass mindestens der erste Magnetfeldsensor in Verbindung mit der Vorrichtung außerhalb der Vorrichtung positionierbar ist, und/oder dass die Vorrichtung in der Weise ausgestaltet ist, dass die Kamera und/oder der zweite Magnetfeldsensor in Verbindung mit der Vorrichtung außerhalb der Vorrichtung positionierbar ist.

Eine weitere vorteilhafte Ausführungsform der erfindungsgemäßen Vorrichtung ist dadurch gekennzeichnet, dass die Vorrichtung eine erste außerhalb der Vorrichtung positionierbare Komponente aufweist, der der erste Magnetfeldsensor zugeordnet ist, und/oder dass die Vorrichtung eine zweite außerhalb der Vorrichtung positionierbare Komponente aufweist, der die Kamera und/oder den zweiten Magnetfeldsensor zugeordnet ist.
Damit ist die erfindungsgemäße Vorrichtung in der Weise ausgestaltet, dass der erste Magnetfeldsensor und der zweite Magnetfeldsensor in unterschiedlichen Abständen (a1, a2, a3) voneinander positionierbar sind. Mit der Vergrößerung dieser Abstände lässt sich bei der erfindungsgemäßen Vorrichtung die Meßgenauigkeit der Geschwindigkeit von Fahrzeugen in einfacher Weise verbessern, ohne die Abmessungen des eigentlichen Vorrichtungskörpers zu vergrößern. Im Ergebnis wird eine kompakte Vorrichtung geschaffen, die sich durch eine hinreichende große Meßgenauigkeit auszeichnet.

Die erste Komponente ist als ausfahrbarer oder ausklappbarer Träger für den ersten Magnetfeldsensor ausgestaltet, und/oder ist die zweite Komponente als ausfahrbarer oder ausklappbarer Träger für die Kamera ausgestaltet.

In vorteilhafter Weise ist eine Ausführungsform der erfindungsgemäßen Vorrichtung dadurch gekennzeichnet, dass die erste Komponente ein erstes Standbein aufweist, und/oder dass die zweite Komponente ein zweites Standbein aufweist. Die Standbeine sind insbesondere höhenverstellbar. Damit lassen sich die Komponenten in einfacher Weise stabilisieren.

In vorteilhafter Weise ist eine erste Winkelstrebe mit der ersten Komponente verbindbar und/oder eine zweite Winkelstrebe ist mit der zweiten Komponente verbindbar. Auch lassen sich die Komponenten alternativ oder zusätzlich in einfacher Weise stabilisieren.

Die Vorrichtung kann mobil ausgestaltet sein; ihr sind beispielsweise Räder zugeordnet, die sich beispielsweise an Standbeinen der Vorrichtung befinden. Bei anderen vorteilhaften Ausführungsformen der Erfindung ist die Vorrichtung auf einem Fahrzeuganhänger angeordnet oder bildet einen integralen Bestandteil des Fahrzeuganhängers. Damit lässt sich die Vorrichtung ohne Einschränkung ihrer Funktionsfähigkeit in einfacher Weise optisch kaschieren, so dass die Lenker von Fahrzeugen, deren Geschwindigkeit gemessen wird, die Vorrichtung vor der Messung optisch nicht wahrnehmen.

Weiterhin kann die Vorrichtung kann mit Solarzellen ausgestattet sein, die der Energieversorgung, insbesondere des Prozessors, der Magnetfeldsensoren und der Kamera, dienen.

Eine weitere vorteilhafte Ausführungsform der erfindungsgemäßen Vorrichtung ist dadurch gekennzeichnet, dass mindestens eine erste Wasserwaage zwischen erstem Magnetfeldsensor und zweitem Magnetfeldsensor angeordnet ist, und/oder dass mindestens eine zweite Wasserwaage zwischen zweiten Magnetfeldsensor und Kamera vorgesehen ist.
Damit lassen sich die Sensoren und die Kamera in einfacher Weise zueinander ausrichten.

Eine vorteilhafte Ausführungsform des erfindungsgemäßen Verfahrens ist dadurch gekennzeichnet, dass dem Prozessor ein Steuerungsprogramm zugeordnet, das in der Weise ausgestaltet ist, dass ausgelöst durch das zeitlich erste Signal des ersten Magnetfeldsensors die Kamera ein Frontfoto des Fahrzeugs erstellt. In vorteilhafter Weise kann damit die Kamera vergleichsweise nahe an dem zweiten Magnetfeldsensor angeordnet werden. Auch hierdurch lässt sich die Vorrichtung kompakt ausgestalten, ohne dass dadurch die Meßgenauigkeit eingeschränkt wird. Die erfindungsgemäße Vorrichtung kann Daten, die das Fahrzeug und die die berechnete Geschwindigkeit des Fahrzeugs bezeichnen, an mindestens eine Datenempfangseinrichtung übertragen.

Die Erfindung wird nun anhand beispielhafter Ausführungsformen beschrieben.

Es zeigt
- Figur 1: eine Vorrichtung gemäß der Erfindung in drei unterschiedlichen Ausführungsformen; und
- Figur 2: eine Anordnung der Magnetfeldsensoren, der Kamera und eines Prozessors in Form eines Blockschaltbildes.

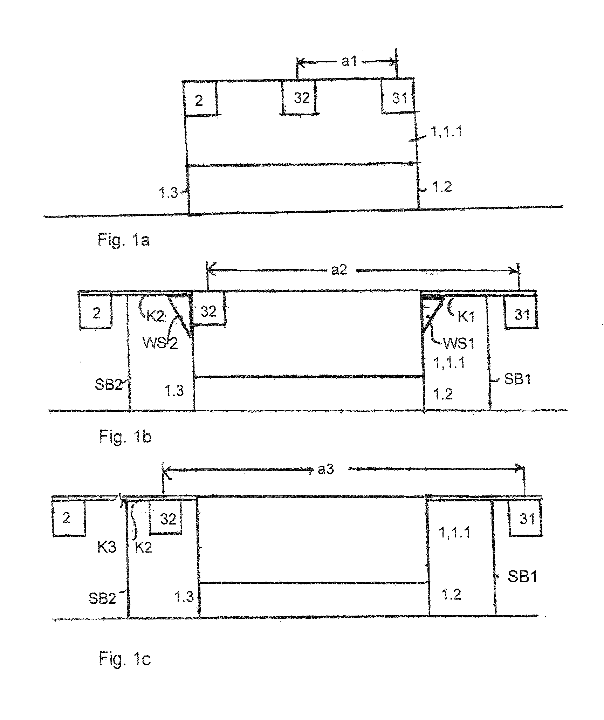

Die in Figur 1 schematisch dargestellte Vorrichtung 1 weist einen ersten Magnetfeldsensor 31, einen zweiten Magnetfeldsensor 32 sowie eine Kamera 2 auf. Die Sensoren 31 und 32 sowie die Kamera 2 können in den eigentlichen Vorrichtungskörper 1.1 integriert sein oder der Vorrichtung 1 in anderer Weise zugeordnet sein.

Der Vorrichtungskörper 1.1 kann insbesondere mit den in der Vorderansicht nach Figur 1 dargestellten Standbeinen 1.2 und 1.3 ausgestattet sein, wobei diese Standbeine in ihrer Höhe verstellbar ausgestaltet sind. Damit lässt sich die Vorrichtung horizontal zu ihrer Standfläche ausrichten.

Der Abstand zwischen dem ersten Magnetfeldsensor 31 und dem zweiten Magnetfeldsensor 32 beträgt bei der in Figur 1 a dargestellten Ausführungsform a1.

Im Vorrichtungskörper 1.1 der in Figur 1b dargestellten Ausführungsform ist lediglich der zweite Magnetfeldsensor 32 integriert. Der Vorrichtungskörper 1.1 ist an seiner einen Seite (rechts in Figur 1 b) mit einer ersten Komponente K1 ausgestattet und an seiner anderen Seite (links in Figur 1 b) mit einer zweiten Komponente K2. Die erste Komponente K1 ist insbesondere als ein ausfahrbarer oder ausklappbarer Träger für den Magnetfeldsensor 31 ausgestaltet, während die zweite Komponente K2 als ausfahrbarer oder ausklappbares Träger für die Kamera 2 ausgestaltet ist. An der zweiten Komponente K2 kann nicht nur die Kamera 2, sondern auch der zweite Magnetfeldsensor 32 angeordnet sein, wie dies in Figur 1c dargestellt ist.

Weiterhin kann vorgesehen sein, dass die zweite Komponente K2 mit einer dritten Komponente K3 verbunden ist, wobei die dritte Komponente K3 gegenüber der zweiten Komponente K2 ebenfalls als ein ausfahrbarer oder ausklappbares Träger ausgestaltet sein kann.

Der Abstand zwischen dem ersten Magnetfeldsensor 31 und dem zweiten Magnetfeldsensor 32 beträgt bei der in Figur 1b dargestellten Ausführungsform a2 und bei der in Figur 1c dargestellten Ausführungsform a3.

Mithilfe der ersten Komponente K1, der zweiten Komponente K2 bzw. der dritten Komponente K3 lässt sich der Abstand a1, a2, a3 zwischen dem ersten Magnetfeldsensor 31 und dem zweitem Magnetfeldsensor 32 verändern; bei dem in den Figuren 1a, 1b und 1c dargestellten Ausführungsbeispielen gilt: a1 < a2 <a3. Die Abstände a2 bzw. a3 betragen mindestens 5 Meter.

Wie zuvor beschrieben, ist die Vorrichtung 1 in der Weise ausgestaltet, dass mindestens der erste Magnetfeldsensor 31 in Verbindung mit der Vorrichtung 1 außerhalb der Vorrichtung 1 bzw. des eigentlichen Vorrichtungskörpers 1.1 positionierbar ist; ebenso ist die Kamera 2 und/oder der zweite Magnetfeldsensor 32 in Verbindung mit der Vorrichtung 1 außerhalb der Vorrichtung 1 bzw. des eigentlichen Vorrichtungskörpers 1.1 positionierbar.

Wie in den Figuren 1b und 1c dargestellt, kann die erste Komponente K1 ein erstes Standbein SB1 aufweisen, während die zweite Komponente K2 ein zweites Standbein SB2 aufweist. Beide Standbeine SB1 und SB2 dienen der Stabilisierung der beiden Komponenten K1, K2 sowie der horizontalen Ausrichtung der beiden Magnetfeldsensoren 31 und 32; sie sind ebenfalls höhenverstellbar.

Weiterhin kann die Vorrichtung, wie in Figur 1b dargestellt, eine erste Winkelstrebe WS1 und/oder eine zweite Winkelstrebe WS2 aufweisen, wobei beide Winkelstreben WS1, WS2 ebenfalls der Stabilisierung der beiden Komponenten K1 und K2 dienen. Die Winkelstreben WS1, WS2 sind vorzugsweise an dem eigentlichen Vorrichtungskörper 1.1 in der Weise befestigt, dass sie, sofern die erste bzw. Komponente K1, K2 nicht außerhalb der Vorrichtung positioniert ist, an dem Vorrichtungskörper 1.1 anliegen und dass sie, sofern die erste bzw. Komponente K1, K2 außerhalb der Vorrichtung positioniert ist, sich so verschwenken lässt, dass sie unter die jeweilige Komponente K1, K2 greift.

Der ersten Komponente K1 und/oder der zweiten Komponente K2 und/oder einer eventuell vorhandenen dritten Komponente K3 kann mindestens ein Motor, vorzugsweise ein Elektromotor zugeordnet sein, mit dem K1, K2 und/oder K3 ausgefahren oder ausgeklappt wird. Vorzugsweise sind komponentenindividuelle Motoren vor- gesehen, also ein erster Motor für K1, ein zweiter Motor für K2 und/oder ein dritter Motor für K3. Der Motor beziehungsweise die Motoren können fernsteuerbar ausgestaltet sein.

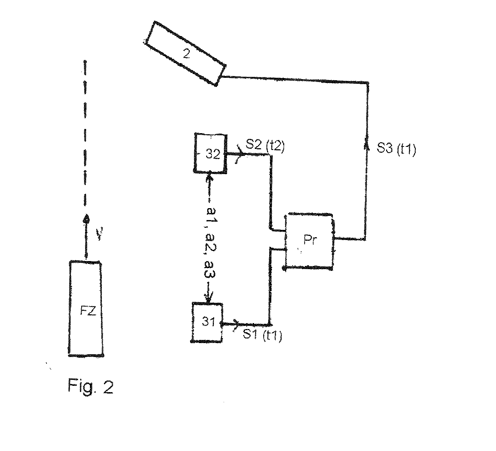

In Figur 2 ist eine Anordnung der Magnetfeldsensoren 31 und 32, der Kamera 2 und eines Prozessors Pr in Form eines Blockschaltbildes dargestellt. Die Magnetfeldsensoren 31 und 32 sind entweder im Abstand a1, a2 oder a3 voneinander angeordnet, vergleiche die Figuren 1a, 1b und 1c.

Beide Sensoren 31 und 32 sind ausgangsseitig mit dem Prozessor Pr verbunden, während der Prozessor Pr ausgangsseitig mit der Kamera 2 verbunden ist.

Die erfindungsgemäße Vorrichtung kann auch bei Bedarf mehr als zwei Magnetfeldsensoren aufweisen, um die Meßgenauigkeit der Vorrichtung weiter zu erhöhen.

In Figur 2 ist weiterhin ein Fahrzeug FZ dargestellt. Dieses passiert zunächst den ersten Magnetfeldsensor 31, legt im Anschluss daran die Wegstrecke a1, a2 oder a3 zurück und passiert dann den zweiten Magnetfeldsensor 32.

Das Fahrzeug FZ verändert zunächst die Stärke des Erdmagnetfeldes im Bereich des ersten Sensors 31 und nach Zurücklegen der Wegstrecke a1, a2 oder a3 die Stärke des Erdmagnetfeldes im Bereich des zweiten Sensors 32.

Sobald der erste Magnetfeldsensor 31 das Fahrzeug FZ zum Zeitpunkt t1 erfasst, erzeugt dieser ein zeitlich erstes Signal S1. Sobald der zweite Magnetfeldsensor 32 das Fahrzeug FZ zum späteren Zeitpunkt t2 erfasst, erzeugt dieser ein zeitlich zweites Signal S2. Die beiden Signale S1 und S2 werden dem Prozessor Pr zugeführt, der aus beiden Signalen S1 und S2 und aus dem jeweiligen Abstand a1, a2 oder a3 der beiden Sensoren die Geschwindigkeit v des Fahrzeugs FZ berechnet.

Dem Prozessor Pr ist ein Steuerungsprogramm zugeordnet, dass in der Weise ausgestaltet ist, dass bereits ausgelöst durch das zeitlich erste Signal S1 der Prozessor Pr mittels eines dritten Signals S3 die Kamera 2 ansteuert. Die Kamera 2 erstellt, ausgelöst durch das dritte Signal S3, ein Frontfoto des Fahrzeugs FZ.

Das dritte Signal S3 kann identisch dem ersten Signal S1 sein, so dass in diesem Fall der Prozessor Pr das erste Signal S1 zu der Kamera 2 durchschaltet und kein separates Signal S3 erzeugt. In diesem Fall erstellt die Kamera 2, ausgelöst durch das erste Signal S1 das Frontfoto des Fahrzeugs FZ.

Weiterhin kann das von der Kamera 2 erstellte Foto gelöscht werden, wenn sich aufgrund der Berechnung durch den Prozessor Pr ergibt, dass das betreffende Fahrzeug FZ die Wegstrecke a1, a2 oder a3 nicht mit einer vorgegebenen überhöhten Geschwindigkeit zurückgelegt hat bzw. wenn die Geschwindigkeit v des Fahrzeugs FZ unter einem vorgegebenen Höchstwert (vₘₐₓ) liegt.

Wenn, wie zuvor beschrieben, die Kamera 2 bereits ausgelöst durch das erste Signal S1 des ersten Sensors 31 das Frontfoto des Fahrzeugs FZ erstellt, ist der Abstand zwischen zweitem Sensor 32 und der Kamera 2 von untergeordneter Bedeutung; zweiter Sensor 32 und Kamera 2 lassen sich in einem vergleichsweise geringen Abstand voneinander anordnen. Damit lässt sich auch insoweit die erfindungsgemäße Vorrichtung kompakt ausgestalten.

Die Vorrichtung kann in eine in den Figuren nicht dargestellte erste Wasserwaage W1 aufweisen, die zwischen erstem Magnetfeldsensor 31 und zweitem Magnetfeldsensor 32 angeordnet ist, und/oder eine in den Figuren nicht dargestellte zweite Wasserwaage W2 zwischen zweitem Magnetfeldsensor 32 und Kamera 2. Jede Wasserwaage dient dazu, die beiden Sensoren in genauer einer, im wesentlichen horizontalen Linie gegenüber der Standfläche der Vorrichtung auszurichten.

Die Energieversorgung kann mittels Batterien oder Solarzellen erfolgen.

An Autobahnen lässt sich die erfindungsgemäße Vorrichtung links oder rechts hinter den Leitplanken positionieren.

Der erfindungsgemäßen Vorrichtung können auch Räder zugeordnet sein. Beispielsweise sind die Räder an den Standbeinen (1.2 und 1.3 in Figuren 1a, 1b und 1c) angeordnet; alternativ ist vorgesehen, dass die erfindungsgemäße Vorrichtung auf einem Fahrzeuganhänger angeordnet ist oder dass diese einen integralen Bestandteil des Fahrzeuganhängers bildet. So kann vorgesehen sein, dass der Anhänger Befestigungsmittel aufweist, mit denen die Vorrichtung befestigt wird. Vorzugsweise sind die Befestigungsmittel in der Weise ausgestaltet, dass sich die Vorrichtung in einfacher Weise mit dem Anhänger befestigen und bei Bedarf von diesem lösen lässt.

Die Erfindung betrifft auch ein Verfahren zur Geschwindigkeitsmessung von Fahrzeugen, mit einer zuvor beschriebenen Vorrichtung. Dem Prozessor Pr ist dabei ein Steuerungsprogramm zugeordnet, das in der Weise ausgestaltet ist, dass ausgelöst durch das zeitlich erste Signal S1 des ersten Magnetfeldsensors 31 der Prozessor Pr ein drittes Signal S3 erzeugt und damit die Kamera 2 ansteuert, die ein Frontfoto des Fahrzeugs FZ erstellt.

Alternativ zu der Erzeugung des dritten Signals S3 kann vorgesehen sein, dass der Prozessor Pr das erste Signal S1 an die Kamera 2 durchschaltet, die ausgelöst durch das erste Signal S1 das Frontfoto des Fahrzeugs FZ erstellt.

Das zweite Signal S2 dient zur Berechnung der Geschwindigkeit des Fahrzeugs FZ und zur Entscheidung, ob ein von der Kamera K2 erstelltes Foto (Frontfoto des Fahrzeugs) und die Daten des Vorgangs (nicht überhöhte Geschwindigkeit eines Fahrzeugs) gelöscht werden.

Das dem Prozessor Pr zugeordnete Steuerungsprogramm kann dementsprechend in der Weise ausgestaltet sein, dass ausgelöst durch das zeitlich erste Signal S1 des ersten Magnetfeldsensors 31 der Prozessor Pr ein drittes Signal S3 erzeugt und damit die Kamera 2 ansteuert, die ein Foto, insbesondere ein Frontfoto des Fahrzeugs erstellt. Anstelle der Erzeugung des dritten Signals S3 kann der Prozessor das erste Signal S1 von dem ersten Magnetfeldsensor S1 an die Kamera 2 durchschalten und die Kamera 2 mit dem ersten Signal S1 ansteuert.

Im Rahmen des erfindungsgemäßen Verfahrens kann die Vorrichtung 1 das erste Signal S1, das zweite Signal S2, das dritte Signal S3 und/oder Daten, die das Fahrzeug FZ und die die berechnete Geschwindigkeit v des Fahrzeugs FZ bezeichnen, an mindestens eine Datenempfangseinrichtung übertragen. Diese kann einer Behörde zugeordnet sein, die für Verkehrssicherheit zuständig ist.

### Bezugszeichen

- 1: Vorrichtung
- 1.1: Gehäuse der Vorrichtung
- 1.2, 1.3: Standbeine von 1.1
- 2: Kamera für Frontfoto
- Pr: Prozessor
- 31: Erster Magnetfeldsensor
- 32: Zweiter Magnetfeldsensor
- S1: Zeitlich (t1) erstes Signal, generiert von 31
- S2: Zeitlich (t2) zweites Signal generiert von 32
- S3: Drittes Signal, generiert von Pr
- K1: Erste Komponente
- K2: Zweite Komponente
- K3: Dritte Komponente
- SB1: Erstes Standbein (von K1)
- SB2: Zweites Standbein (von K2)
- WS1: Erste Winkelstrebe
- WS2: Zweite Winkelstrebe
- a1, a2, a3: Erster, zweiter, dritter Abstand a zwischen erstem Magnetfeldsensor 31 und zweitem Magnetfeldsenor 32
- FZ: Fahrzeug
- v: Geschwindigkeit des Fahrzeugs
- vₘₐₓ: Höchstwert einer erlaubten Geschwindigkeit des Fahrzeugs

## Patentansprüche

1. Vorrichtung (1) zur Geschwindigkeitsmessung von Fahrzeugen, mindestens mit einem ersten Magnetfeldsensor (31), einem zweiten Magnetfeldsensor (32), mit einer Kamera (2) und mit einem Prozessor (Pr), der mit dem ersten Magnetfeldsensor (31), dem zweiten Magnetfeldsensor (32) und der Kamera (2) verbunden ist, wobei der erste Magnetfeldsensor (31) bei Erfassung eines Fahrzeugs ein zeitlich erstes Signal (S1) erzeugt, wobei der zweite Magnetfeldsensor (32) bei Erfassung des Fahrzeugs ein zeitlich zweites Signal (S2) erzeugt, wobei der erste Magnetfeldsensor (31) und der zweite Magnetfeldsensor (32) in einem vorgegebenen Abstand (a) voneinander entfernt sind, wobei der Prozessor (Pr) in der Weise ausgestaltet ist, dass dieser aus dem ersten Signal (S1), dem zweiten Signal (S2) und aus dem Abstand (a) der Magnetfeldsensoren (31, 32) die Geschwindigkeit (v) des Fahrzeugs berechnet, und wobei die Kamera (2) mindestens ein Foto des Fahrzeugs erstellt,
**dadurch gekennzeichnet,**
**dass** die Vorrichtung (1) in der Weise ausgestaltet ist, dass mindestens der erste Magnetfeldsensor (31) in Verbindung mit der Vorrichtung (1) außerhalb der Vorrichtung (1) positionierbar ist, und/oder
**dass** die Vorrichtung (1) in der Weise ausgestaltet ist, dass die Kamera (2) und/oder der zweite Magnetfeldsensor (32) in Verbindung mit der Vorrichtung (1) außerhalb der Vorrichtung (1) positionierbar ist.

2. Vorrichtung (1) nach Anspruch 1, **dadurch gekennzeichnet, dass** die Vorrichtung (1) eine erste außerhalb der Vorrichtung (1) positionierbare Komponente (K1) aufweist, der der erste Magnetfeldsensor (31) zugeordnet ist, und/oder dass die Vorrichtung (1) eine zweite außerhalb der Vorrichtung (1) positionierbare Komponente (K2) aufweist, der die Kamera (2) und/oder der der zweite Magnetfeldsensor (32) zugeordnet ist.

3. Vorrichtung (1) nach Anspruch 2, **dadurch gekennzeichnet, dass** die erste Komponente (K1) als ausfahrbarer oder ausklappbarer Träger für den ersten Magnetfeldsensor (31) ausgestaltet ist, und/oder dass die zweite Komponente (K2) als ausfahrbarer oder ausklappbarer Träger für die Kamera (2) und/oder für den zweiten Magnetfeldsensor (32) ausgestaltet ist, und/oder dass der ersten Komponente (K1) und/oder der zweiten Komponente (K2) mindestens ein Motor, vorzugsweise ein Elektromotor zugeordnet ist, mit dem die erste Komponente (K1) und/oder die zweite Komponente (K2) ausgefahren oder ausgeklappt wird.

4. Vorrichtung (1) nach Anspruch 2 oder 3, **dadurch gekennzeichnet, dass** die erste Komponente (K1) ein erstes Standbein (SB1) aufweist, und/oder dass die zweite Komponente (K2) ein zweites Standbein (SB2) aufweist.

5. Vorrichtung (1) nach einem der Ansprüche 2 bis 4, **dadurch gekennzeichnet, dass** eine erste Winkelstrebe (WS1) mit der ersten Komponente (K1) verbindbar ist und/oder dass eine zweite Winkelstrebe (WS2) mit der zweiten Komponente (K2) verbindbar ist.

6. Vorrichtung (1) nach einem der vorstehenden Ansprüche, **dadurch gekennzeichnet, dass** die Vorrichtung (1) in der Weise ausgestaltet ist, dass der erste Magnetfeldsensor (31) und der zweite Magnetfeldsensor (32) in unterschiedlichen Abständen (a1, a2, a3) voneinander positionierbar sind.

7. Vorrichtung (1) nach einem der vorstehenden Ansprüche, **dadurch gekennzeichnet, dass** die Vorrichtung (1) mobil ausgestaltet ist und/oder dass der Vorrichtung (1) Räder zugeordnet sind und/oder dass die Vorrichtung (1) mit einem Räder aufweisenden Fahrzeuganhänger befestigbar ist.

8. Vorrichtung (1) nach einem der vorstehenden Ansprüche, **dadurch gekennzeichnet, dass** mindestens eine erste Wasserwaage (W1) zwischen erstem Magnetfeldsensor (31) und zweitem Magnetfeldsensor (32) angeordnet ist, und/oder dass mindestens eine zweite Wasserwaage (W2) zwischen zweiten Magnetfeldsensor (32) und Kamera (2) vorgesehen ist und/oder dass der Vorrichtung (1) Solarzellen zugeordnet sind.

9. Verfahren zur Geschwindigkeitsmessung von Fahrzeugen, mit einer Vorrichtung (1) nach einem der vorstehenden Ansprüche, wobei die Vorrichtung (1) einen ersten Magnetfeldsensor (31), einen zweiten Magnetfeldsensor (32), eine Kamera (2) und einen Prozessor (Pr) aufweist, der mit dem ersten Magnetsensor (31), dem zweiten Magnetfeldsensor (32) und der Kamera (2) verbunden ist, wobei der erste Magnetfeldsensor (31) bei Erfassung eines Fahrzeugs (FZ) ein zeitlich erstes Signal (S1) erzeugt, wobei der zweite Magnetfeldsensor (32) bei Erfassung des Fahrzeugs ein zeitlich zweites Signal (S2) erzeugt,
**dadurch gekennzeichnet,**
**dass** dem Prozessor (Pr) ein Steuerungsprogramm zugeordnet, das in der Weise ausgestaltet ist, dass ausgelöst durch das zeitlich erste Signal (S1) des ersten Magnetfeldsensors (31) der Prozessor (Pr) ein drittes Signal (S3) erzeugt und damit die Kamera (2) ansteuert, die ein Frontfoto des Fahrzeugs erstellt oder anstelle der Erzeugung des dritten Signals (S3) das erste Signal (S1) von dem ersten Magnetfeldsensor (S1) an die Kamera (2) durchschaltet und die Kamera (2) mit dem ersten Signal (S1) ansteuert.

10. Verfahren nach Anspruch 9, **dadurch gekennzeichnet, dass** das dem Prozessor (Pr) zugeordnete Steuerungsprogramm in der Weise ausgestaltet ist, dass in Abhängigkeit des erstes Signals (S1), des zweiten Signal (S2) und des Abstandes (a) der Magnetfeldsensoren (31, 32) die Geschwindigkeit (v) des Fahrzeugs (FZ) im Bereich zwischen beiden Magnetfeldsensoren (31, 32) berechnet wird, und dass für Fahrzeuge (FZ), deren Geschwindigkeit (v) unter einem vorgegebenen Höchstwert (vₘₐₓ) liegt, von der Kamera (2) erstellte Fotos gelöscht werden.
